# EUROPÄISCHE PATENTSCHRIFT

(11) **EP 1 527 750 B1**
(45) Veröffentlichungstag und Bekanntmachung des Hinweises auf die Patenterteilung: **13.01.2010**
(21) Anmeldenummer: 05000197.3
(22) Anmeldetag: 18.10.2000
(51) Int. Cl.: A61C 17/34

(54) **Mundpflegegerät mit einem schwingenden Interdentalbehandlungskopf**
Oral care apparatus with a vibrating interdental head
Appareil de soins dentaires à tête vibrante interdentaire

(30) Priorität: 19.10.1999 DE 19950204; 03.11.1999 DE 29919053 U
(43) Veröffentlichungstag der Anmeldung: 04.05.2005
(62) Teilanmeldung aus: 00965717.2
(73) Patentinhaber: Trisa Holding AG, 6234 Triengen (CH)
(72) Erfinder: Häfliger, Peter, 6234 Triengen (CH); Fischer, Franz, 6234 Triengen (CH); Elster, Günther, 89312 Günzburg (DE)
(74) Vertreter: Schaad, Balass, Menzl & Partner AG

(56) Entgegenhaltungen:
- EP-A- 0 704 180
- EP-A- 0 850 602
- GB-A- 2 250 428
- US-A- 5 123 841
- US-A- 5 546 624

## Beschreibung

Die Erfindung betrifft ein Mundpflegegerät gemäss dem Oberbegriff des Anspruches 1.

Aus der EP-A-0 704 180 ist ein Mundpflegegerät dieser Art bekannt, das einen Handgriff und einen auf diesen aufsteckbaren Behandlungsteil aufweist. Der Behandlungsteil besteht aus einem auf den Handgriff aufsetzbaren Halsteil und einem Kopfteil mit einer Interdentalbürste. Im Innern des Handgriffes ist eine Vibrationsvorrichtung bestehend aus einem Motor und einem Exzenter sowie eine elektrische Energiequelle (Batterie) für die Speisung des Motors untergebracht. Bei an die Energiequelle angeschlossenem Motor wird der Handgriff durch die Vibrationsvorrichtung in Schwingung versetzt. Die Schwingungen des Handgriffes werden dann auf den Kopfteil, d.h. auf die Interdentalbürste, übertragen. Die Stärke der Vibrationen und damit die Reinigungswirkung werden durch die Lage der Hand des Benutzers am Handgriff beeinflusst.

Der vorliegenden Erfindung liegt nun die Aufgabe zugrunde, ein kostengünstiges Mundpflegegerät der eingangs genannten Art zu schaffen, das unabhängig davon, an welcher Stelle der Benutzer den Handgriff umfasst, immer die gleiche, wirksame Reinigungswirkung entfaltet.

Diese Aufgabe wird erfindungsgemäss durch ein Mundpflegegerät mit den Merkmalen des Anspruches 1 gelöst.

Dadurch, dass die den vorderen Interdentalbehandlungskopf in Schwingung versetzende mechanische Vibrationsvorrichtung in diesem Interdentalbehandlungskopf oder in einem an den Interdentalbehandlungskopf angrenzenden Bereich eines den Interdentalbehandlungskopf mit dem Handgriff verbindenden Halsteiles untergebracht ist und über im Halsteil verlaufende elektrische Verbindungen mit einer im Handgriff untergebrachten Energiequelle wirkverbunden ist, wird erreicht, dass sich die die verbesserte Reinigungswirkung bewirkenden Vibrationen in erster Linie im Interdentalbehandlungskopf entfalten und im Handgriff nur geringfügig zu verspüren sind, wodurch eine angenehme Handhabung des Mundpflegegerätes erreicht wird. Ein weiterer Vorteil des erfindungsgemässen Mundpflegegerätes besteht darin, dass durch den flexiblen Halsteil keine mechanischen Antriebsmittel zu der Vibrationsvorrichtung geführt werden müssen. Durch den Halsteil verlaufen lediglich die als Drähte, Kabel oder elektrisch leitende Kunststoffbahnen ausgebildeten elektrischen Verbindungen.

Bevorzugte Weiterausgestaltungen der erfindungsgemässen Zahnbürste bilden den Gegenstand der abhängigen Ansprüche.

Die Erfindung wird nun anhand der Zeichnung näher erläutert.

Es zeigen rein schematisch:
- Fig. 1: in Seitenansicht und teilweise im Schnitt ein erstes Ausführungsbeispiel einer erfindungsgemässen Zahnbürste und einen Handgriff-Verschlussteil voneinander getrennt (ohne Batterie);
- Fig. 2: in Unteransicht und teilweise im Schnitt ein zweites Ausführungsbeispiel einer erfindungsgemässen Zahnbürste im zusammengesetzten Zustand;
- Fig. 3: in Seitenansicht und teilweise im Schnitt die Zahnbürste nach Fig. 2 und den Verschlussteil voneinander getrennt (ohne Batterie);
- Fig. 4: in Seitenansicht ein drittes Ausführungsbeispiel einer erfindungsgemässen Zahnbürste im zusammengesetzten Zustand; und
- Fig. 5: einen vorderen Teil der Zahnbürste nach Fig. 4 mit verschiedenen Ausführungsformen auswechselbarer Behandlungsköpfe.

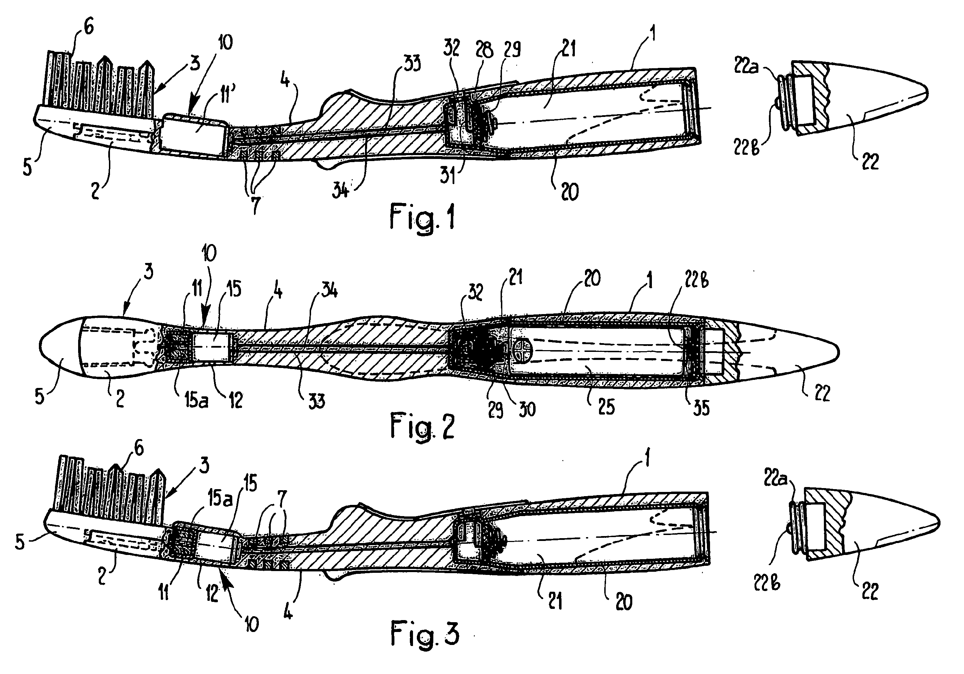

Sowohl die in Fig. 1 dargestellte Zahnbürste als auch diejenige nach Fig. 2 und 3 weist jeweils einen Handgriff 1, einen vorderen, borstentragenden Kopfteil 3 sowie einen den Kopfteil 3 mit dem Handgriff 1 verbindenden Halsteil 4 auf. Die zu Borstenbüscheln 6 zusammengefassten Borsten sind in einem Borstenträger 5 verankert und bilden mit ihren freistehenden Enden eine gegebenenfalls profilierte Bürstfläche. Bei der dargestellten Ausführungsform ist der Borstenträger 5 mit den Borstenbüscheln 6 in einer an sich bekannten und daher nicht näher beschriebenen Weise auswechselbar auf einen Halteteil 2 des Kopfteiles 3 aufgesetzt.

Der Halsteil 4 ist mit Halsteilzonen 7 aus einer elastisch nachgiebigeren Materialkomponente versehen, die die Elastizität des Halsteiles 4 bewirken oder zusätzlich steigern, so dass der borstentragende Kopfteil 3 beim Gebrauch der Zahnbürste bei einer Einwirkung von Kräften in Richtung gegen die Bürstfläche federelastisch zurückdrängbar ist. Gegebenenfalls sind die Halsteilzonen 7 als sich über einen Teil des Halsumfanges erstreckende, mit einem elastisch nachgiebigen Material (z.B. mit thermoplastischem Elastomer) gefüllte Einkerbungen ausgebildet. Eine andere Form und Anzahl von Halsteilzonen wäre selbstverständlich durchaus denkbar. Eine flexible Halszone ist auch ohne Verwendung von elastischen Materialkomponenten denkbar, z.B. durch Einschnürungen oder durch einen Balg.

Im vorderen Kopfteil 3 bzw. im an den Kopfteil 3 angrenzenden Bereich des Halsteiles 4 ist eine mechanische Vibrationsvorrichtung 10 integriert, mittels welcher dem borstentragenden Kopfteil 3 die Zahnreinigung bewirkende oder verstärkende Vibrationen erteilt werden können. Die Vibrationsvorrichtung 10 ist über im Halsteil 4 verlaufende elektrische Verbindungen an eine im Handgriff 1 untergebrachte elektrische Energiequelle anschliessbar, wie anschliessend beschrieben wird. Die bereits erwähnten Halsteilzonen 7 aus einem elastisch nachgiebigen Material wirken dabei als die Schwingung zwischen dem vibrierenden Kopfteil 3 und dem Handgriff 1 dämpfende Mittel, so dass sich die Vibrationswirkung vor allem im Kopfteil entfaltet und nur geringfügig auf den Handgriff 1 übertragen wird. Dies bedeutet, dass während des Zahnreinigungsvorganges nur geringfügige Schwingungen im Handgriff 1 zu verspüren sind, und dadurch die Handhabung der Zahnbürste angenehm ist. Aber auch umgekehrt ist es von Vorteil, dass die erzeugte Vibration durch den Handgriff 1 nicht gedämpft wird und sich im Kopfteil 3 voll auswirken kann. Anstelle der aus elastisch nachgiebigem Material bestehenden Halsteilzonen 7 wären allerdings auch andere schwingungsdämpfende Mittel denkbar; es muss nicht unbedingt ein elastisches Material eingesetzt werden. Die Dämpfung kann auch unter Verwendung eines Grundmaterials durch besondere Formgestaltung des Halsteiles erreicht werden, beispielsweise durch Vorhandensein eines Balg/Ziehharmonika - Teiles etc.

Im Handgriff 1 ist eine sich in seiner Längsrichtung erstreckende Kapsel bzw. Hülse 20 aus elektrisch leitendem Material untergebracht. Sowohl der Handgriff 1 als auch die Hülse 20 sind nach hinten offen, so dass ein durch einen Verschlussteil 22 von hinten verschliessbarer Hohlraum 21 gebildet ist, in den eine Batterie 25, beim dargestellten Ausführungsbeispiel eine handelsübliche, nicht wiederaufladbare Stiftbatterie mit einer definierten Leistung (z.B. 1,5 V) als Energiequelle für die Vibrationsvorrichtung 10 einsetzbar ist. Als Energiequelle könnte allerdings auch eine Knopfbatterie oder eine wiederaufladbare Akku-Zelle Verwendung finden.

In der Hülse 20 ist an einer Querwand 28 ein Federkontakt 29 für den Plus-Pol 30 der Batterie 25 (vgl. Fig. 2) angebracht, der über eine elektrische Leitung 31, einen in der Hülse 20 eingebauten und von der Aussenseite des Handgriffes 1 betätigbaren Schalter 32 und eine im Halsteil 4 verlaufende elektrische Leitung 33 an die Vibrationsvorrichtung 10 angeschlossen ist. Mittels des Schalters 32 kann die elektrische Verbindung unterbrochen werden.

Der Verschlussteil 22 ist mit einem Gewindezapfen 22a aus einem elektrisch leitenden Material ausgestattet und mit diesem in den Handgriff 1 bzw. in die Hülse 20 einschraubbar. Der Gewindezapfen 22a ist mit einer Kontaktfläche 22b versehen, die beim eingeschraubten Verschlussteil 22 am Minus-Pol 35 der in die Hülse 20 eingesetzten Batterie 25 zur Anlage kommt. Die elektrische Verbindung des Minus-Pols 35 mit der Vibrationsvorrichtung 10 erfolgt über den Gewindezapfen 22a, die Hülse 20 selber und eine die Hülse 20 an die Vibrationsvorrichtung 10 anschliessende, im Halsteil 4 verlaufende Leitung 34.

Anstatt über die elektrisch leitende Hülse 20 könnte die Stromübertragung auch anders erfolgen, beispielsweise unter Verwendung von Drähten oder eines elektrisch leitenden Kunststoffes.

Bei dem in Fig. 1 dargestellten Ausführungsbeispiel umfasst die Vibrationsvorrichtung 10 ein vorzugsweise in der Art eines Schwingungsankers funktionierendes Vibrationselement 11', das über die Leitungen 33, 34 direkt mit der Energiequelle elektrisch verbindbar ist und bei angeschlossener Energiequelle in Vibrationen versetzt wird.

Bei der in Fig. 2 und 3 dargestellten Zahnbürsten-Variante besteht die Vibrationsvorrichtung 10 aus einem Vibrationselement 11 in Form eines mechanische Vibrationen erzeugenden, um eine in Längsrichtung der Zahnbürste liegende Achse drehbaren Exzenters und aus einem unmittelbar angrenzend angeordneten, als Mikromotor 15 ausgebildeten Antrieb. Das Vibrationselement 11 ist mit der Welle 15a des über die Leitungen 33, 34 mit der Energiequelle elektrisch verbindbaren Mikromotors 15 verbunden. Der Mikromotor 15 und der Exzenter können als eine Baueinheit in einem Gehäuse 12 untergebracht werden.

Statt eines drehbeweglich antreibbaren Exzenters könnte auch ein translatorisch antreibbares Vibrationselement 11 in Frage kommen.

Es wäre möglich, bei der erfindungsgemässen Zahnbürste den borstentragenden Kopfteil 3 beweglich gegenüber dem Halsteil 4 anzuordnen, um diesen bei mittels der Vibrationsvorrichtung 10 erzeugten Vibrationen in eine Bewegung gegenüber dem restlichen Teil der Zahnbürste zu versetzen.

Die elektrischen Leitungen 31, 33, 34 könnten auch mit Elektrizität leitenden Kunststoffbahnen realisiert werden.

Beim die Leitungen 31, 33 verbindenden oder unterbrechenden Schalter 32 kann es sich beispielsweise auch um einen Magnetschalter handeln.

Die bevorzugte Ausgestaltung des Schalters 32 beinhaltet jedoch einen auf einem Print angeordneten Impulsschalter und weitere elektronische Komponenten, welche den Schaltzustand speichern.

Die elektrische Verbindung zwischen der Batterie 25 und dem Vibrationselement 11' (Fig. 1) oder dem Antrieb 15 (Fig. 2 und 3) kann aber auch statt durch den Schalter 32 durch Drehen des in den Handgriff 1 bzw. in die Hülse 20 einschraubbaren oder mit diesen bajonettartig verbindbaren Verschlussteiles 22 bewerkstelligt oder unterbrochen werden (d.h. bei einer solchen Ausführung entfällt der Schalter 32).

Statt der Schraubverbindung des hinteren Verschlussteils 22 mit dem Handgriff 1 wäre selbstverständlich auch eine andere lösbare Verbindung (z.B. Steckverbindung, Bajonettverbindung etc.) und eine entsprechende Ausgestaltung des mit dem Minus-Pol 35 zusammenwirkenden Kontaktteils möglich.

Der Verschlussteil 22 könnte auch eine durchaus andere Form aufweisen, als in der Zeichnung dargestellt. Beispielsweise könnte der Verschlussteil mit einer Abstellfläche bzw. einem Fussteil ausgestattet sein und somit als ein Element zum Aufstellen der Zahnbürste dienen.

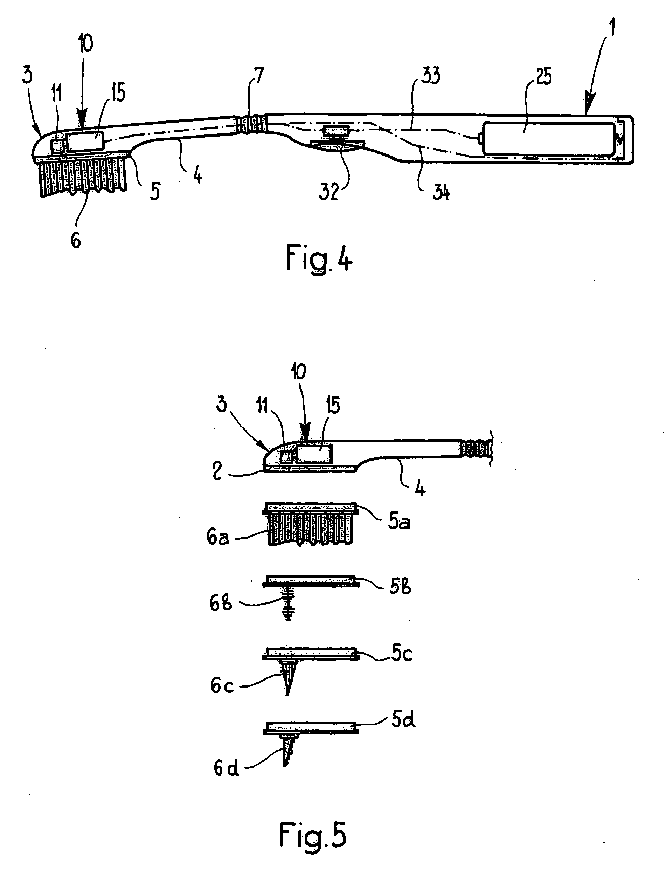

Die in Fig. 4 dargestellte Zahnbürste entspricht im wesentlichen derjenigen nach Fig. 2 und 3; die gleichen Teile sind wiederum mit den gleichen Bezugsziffern bezeichnet. Gemäss Fig. 4 ist die Vibrationsvorrichtung 10 direkt im vorderen Kopfteil 3 angeordnet. Bei diesem Ausführungsbeispiel entfällt die Hülse 20; die Batterie 25 ist direkt über die Leitungen 33, 34 mit der Vibrationsvorrichtung 10 verbunden. Auch bei dieser Zahnbürste wird vorzugsweise ein auf einen Halteteil 2 des Kopfteiles 3 z.B. in der Art einer Schnappverbindung aufsetzbarer, auswechselbarer Borstenträger 5 verwendet. Die Auswechselbarkeit des mit den Borstenbüscheln 6 versehenen Borstenträgers 5 ist von besonderem Vorteil, da die mit der Vibrationsvorrichtung 10 ausgestattete Zahnbürste unabhängig von der Lebensdauer der Borsten, die in der Regel sogar kleiner ist als die Lebensdauer der Batterie 25, verwendet werden kann.

Wie aus Fig. 5 ersichtlich können dabei statt des Borstenträgers 5 bzw. 5a, der einen Teil eines konventionellen Bürstenkopfes bildet und mit Borstenbüscheln 6 bzw. 6a versehen ist, wahlweise verschiedene andere Borstenträger bzw. Adapter 5b bis 5d auf den Halteteil 2 aufgesetzt werden, die mit verschiedenen Interdentalbürsten 6b, 6c bzw. Interdental-Behandlungsteilen 6d zur wirksamen Reinigung der Zahnzwischenräume versehen sind. Die Interdentalbürste 6b kann beispielsweise als eine Spiralbürste aus beschichtetem Draht mit eingedrehten Kunststofffilamenten ausgebildet sein. Die Interdentalbürste 6c besteht aus Borsten, die zusammen eine Bündelspitze bilden. Der Behandlungsteil 6d kann z.B. als ein eine Spitze aufweisendes Kunststoffelement ausgebildet sein, der vorzugsweise mit einer abrasiven Beschichtung zur Entfernung von Plaque und Zahnstein in den Zahnzwischenräumen versehen sein kann. Selbstverständlich könnten auch andere beliebige Behandlungsköpfe verwendet werden.

Auch bei der Variante nach Fig. 4 und 5 könnte der Borstenträger 5 derart ausgestaltet werden, dass eine vibrationsbedingte Bewegung gegenüber dem Halteteil 2 möglich wäre.

Zur Einbringung der Vibrationsvorrichtung 10, der Verbindungsleitungen 33, 34 und weiterer elektronischen Komponenten kann die erfindungsgemässe Zahnbürste bzw. ihr Gehäuse zweiteilig hergestellt und die beiden Teile nach dem Hineinlegen der vorstehend erwähnten Teile wasserdicht verschweisst werden.

Die erfindungsgemässe Zahnbürste kann aber auch vorzugsweise in einem Zwei- oder Mehrkomponenten-Spritzgiessverfahren hergestellt werden. Mit Vorteil werden dabei die vorstehend erwähnten Teile als eine Einheit in einen aus einer ersten Materialkomponente gespritzten Formteil eingelegt und danach mit der zweiten Materialkomponente (oder mit den weiteren Materialkomponenten) umspritzt. Es muss sich dabei nicht um vollständiges Umspritzen handeln. Gewisse Teile können frei liegen, wodurch eine ästhetische Wirkung erzielt werden kann.

Allerdings könnten die oben erwähnten elektronischen Komponenten auch in einen fertig gespritzten Handgriff 1 eingesetzt werden.

Dadurch, dass nicht nur das Vibrationselement 11, 11' selber sondern auch der Antrieb, d.h. der Mikromotor 15, im vorderen Kopfteil 3 oder im unmittelbar angrenzenden vorderen Bereich des Halsteiles 4 angeordnet sind, müssen keine mechanische Antriebsmittel zur Verbindung des Mikromotors mit dem Vibrationselement 11 durch den flexiblen Halsteil 4 geführt werden. Durch den Halsteil 4 verlaufen lediglich die elektrischen Leitungen 33, 34 (Drähte, Kabel oder elektrisch leitende Kunststoffbahnen).

Erfindungsgemäss wird eine mechanische Vibrationsvorrichtung 10 verwendet, die einen Durchmesser von weniger als 15 mm, vorzugsweise weniger als 6 mm aufweist, und weniger als 35 mm, vorzugsweise weniger als 20 mm lang ist. Dadurch wird gewährleistet, dass die Zahnbürste ergonomisch ausgestaltet werden kann und gut handhabbar ist. Die erfindungsgemässe Zahnbürste entspricht in ihrer Grösse ungefähr den herkömmlichen Handzahnbürsten, was eine einfachere Handhabung im Vergleich zu den auf dem Markt erhältlichen, wesentlich grösseren Elektrozahnbürsten bedeutet, und dennoch wird mit dieser Zahnbürste eine mit den bekannten Elektrozahnbürsten vergleichbare, diesen gegenüber jedoch schonendere Reinigungswirkung erreicht. Ausserdem ist die erfindungsgemässe Zahnbürste in der Herstellung einfach und kostengünstig.

Die erfindungsgemässe Vibrationsvorrichtung könnte allerdings auch in herkömmlichen Elektrozahnbürsten integriert werden.

## Patentansprüche

1. Mundpflegegerät mit einem Handgriff (1), einem, einen Interdentalbehandlungsteil (6b, 6c, 6d) aufweisenden vorderen Interdentalbehandlungskopf (3), einem den Interdentalbehandlungskopf (3) mit dem Handgriff (1) verbindenden Halsteil (4), einer im Handgriff (1) untergebrachten elektrischen Energiequelle (25), und einer den Interdentalbehandlungskopf (3) in Schwingung versetzenden mechanischen Vibrationsvorrichtung (10), die einen Antrieb (15) mit einer Welle (15a), auf der ein als Exzenter ausgebildetes Vibrationselement (11) sitzt, aufweist, wobei die Welle (15a) des Antriebs (15) eine Drehachse festlegt, die sich in Längsrichtung des Mundpflegegerätes erstreckt und das Vibrationselement (11) um diese Drehachse drehbar ist, **dadurch gekennzeichnet, dass** die Vibrationsvorrichtung (10) im Interdentalbehandlungskopf (3) oder im an den Interdentalbehandlungskopf (3) angrenzenden Bereich des Halsteils (4) untergebracht ist und über im Halsteil (4) verlaufende elektrische Verbindungen (33, 34) mit der elektrischen Energiequelle (25) wirkverbunden ist.

2. Mundpflegegerät nach Anspruch 1, **dadurch gekennzeichnet, dass** der mit der Energiequelle (25) elektrisch verbindbare Antrieb (15) unmittelbar angrenzend an das Vibrationselement (11) im Interdentalbehandlungskopf (3) oder im an den Interdentalbehandlungskopf (3) angrenzenden Bereich des Halsteils (4) angeordnet ist.

3. Mundpflegegerät nach Anspruch 1 oder 2, **dadurch gekennzeichnet, dass** das Vibrationselement (11) und der Antrieb (15) in einem Gehäuse (12) untergebracht sind.

4. Mundpflegegerät nach einem der Ansprüche 1 bis 3, **dadurch gekennzeichnet, dass** zur Verhinderung einer Vibrationsübertragung vom Interdentalbehandlungskopf (3) auf den Handgriff (1) schwingungsdämpfende Mittel (7) vorgesehen sind.

5. Mundpflegegerät nach Anspruch 4, **dadurch gekennzeichnet, dass** der Halsteil (4) im zwischen dem Vibrationselement (11) und dem Handgriff (1) liegenden Bereich schwingungsdämpfende Halsteilzonen (7) aus einem elastisch nachgiebigen Material aufweist.

6. Mundpflegegerät nach einem der Ansprüche 1 bis 5, **dadurch gekennzeichnet, dass** als Energiequelle eine auswechselbare Batterie (25) dient, die in den Handgriff (1) einsetzbar und mit dem Antrieb (15) elektrisch verbindbar ist.

7. Mundpflegegerät nach Anspruch 6, **dadurch gekennzeichnet, dass** die Batterie (25) in eine in einem nach hinten offenen und durch einen Verschlussteil (22) von hinten verschliessbaren Handgriff-Hohlraum (21) angeordnete Hülse (20) aus elektrisch leitendem Material einsetzbar ist.

8. Mundpflegegerät nach Anspruch 6 oder 7, **dadurch gekennzeichnet, dass** die elektrische Verbindung eines Batterie-Pols (30) mit dem Antrieb (15) über einen Federkontakt (29) und über vom Federkontakt (29) zum Antrieb (15) führende Leitungen (31; 33) erfolgt und die elektrische Verbindung des anderen Batterie-Pols (35) über einen Teil (22a) des mit dem Handgriff (1) in lösbarer Verbindung stehenden Verschlussteiles (22) und eine an den Antrieb (15) angeschlossene Leitung (34) bewerkstelligt wird, wobei ein Schalter (32) zum Unterbrechen einer der beiden elektrischen Verbindungen vorgesehen ist.

9. Mundpflegegerät nach Anspruch 8, **dadurch gekennzeichnet, dass** die vom Federkontakt (29) zum Antrieb (15) führenden Leitungen (31; 33) über den Schalter (32) miteinander verbindbar sind, wobei der Schalter (32) im Handgriff (1) eingebaut und von der Aussenseite des Handgriffes (1) betätigbar ist.

10. Mundpflegegerät nach Anspruch 8, **dadurch gekennzeichnet, dass** der Schalter im Verschlussteil (22) integriert und durch Verdrehen des in den Handgriff (1) einschraubbaren oder bajonettartig mit diesen verbindbaren Verschlussteils (22) betätigbar ist.

11. Mundpflegegerät nach einem der Ansprüche 1 bis 10, **dadurch gekennzeichnet, dass** der Interdentalbehandlungskopf (3) einen Halteteil (2) aufweist, auf welchen ein Interdentalbehandlungsteil (6b, 6c, 6d) auswechselbar aufgesetzt ist.

12. Mundpflegegerät nach einem der Ansprüche 1 bis 11, **dadurch gekennzeichnet, dass** der Interdentalbehandlungskopf (3) gegenüber dem Halsteil (4) beweglich angeordnet und durch die mittels der Vibrationsvorrichtung (10) erzeugten Vibrationen in eine Relativbewegung gegenüber dem Halsteil (4) versetzbar ist.

13. Mundpflegegerät nach einem der Ansprüche 1 bis 12, **dadurch gekennzeichnet, dass** die Vibrationsvorrichtung (10) und die elektronischen Komponenten eine Einheit bilden, die dazu bestimmt ist, in einen aus einer ersten Materialkomponente im Spritzgiessverfahren hergestellten Formteil eingelegt und mit mindestens einer weiteren Materialkomponente wenigstens teilweise umspritzt zu werden.

14. Mundpflegegerät nach einem der Ansprüche 1 bis 12, **dadurch gekennzeichnet, dass** die Vibrationsvorrichtung (10) und die elektronischen Komponenten eine Einheit bilden, die dazu bestimmt ist, zwischen zwei separat hergestellten Zahnbürstenteilen untergebracht zu werden, die miteinander wasserdicht verbunden, vorzugsweise verschweisst, werden.

15. Mundpflegegerät nach einem der Ansprüche 1 bis 14, **dadurch gekennzeichnet, dass** die mechanische Vibrationsvorrichtung (10) einen Durchmesser von weniger als 15 mm, vorzugsweise weniger als 6 mm, und eine Länge von weniger als 35 mm, vorzugsweise weniger als 20 mm, aufweist.

16. Mundpflegegerät nach einem der Ansprüche 1 bis 15, **dadurch gekennzeichnet, dass** der Interdentalbehandlungsteil als eine Interdentalbürste (6b, 6c) ausgebildet ist.

17. Mundpflegegerät nach einem der Ansprüche 1 bis 15, **dadurch gekennzeichnet, dass** der Interdentalbehandlungsteil als ein Interdentalbehandlungselement (6d) zum Entfernen von Plaque und Zahnstein in den Zahnzwischenräumen ausgebildet ist.

## Claims

1. Oral-care appliance having a handle (1), having an interdental treatment head (3) at the front comprising an interdental treatment part (6b, 6c, 6d), having a neck part (4) which connects the interdental treatment head (3) to the handle (1), having an electric power source (25) accommodated in the handle (1), and having a mechanical vibration device (10) which sets the interdental treatment head (3) in vibration and has a drive (15) with a shaft (15a) on which is seated a vibration element (11) defined in the form of an eccentric, wherein the shaft (15a) of the drive (15) defines an axis of rotation that extends in the longitudinal direction of the oral-care appliance, and the vibration element (11) can be rotated about this axis of rotation, **characterized in that** the vibration device (10) is accommodated in the interdental treatment head (3), or **in that** region of the neck part (4) which is adjacent to the interdental treatment head (3), and is operatively connected to the electric power source (25) via electrical connections (33, 34) running in the neck part (4).

2. Oral-care appliance according to Claim 1, **characterized in that** the drive (15), which can be connected electrically to the power source (25), is arranged directly adjacent to the vibration element (11) in the interdental treatment head (3), or **in that** region of the neck part (4) which is adjacent to the interdental treatment head (3).

3. Oral-care appliance according to Claim 1 or 2, **characterized in that** the vibration element (11) and the drive (15) are accommodated in a housing (12).

4. Oral-care appliance according to one of Claims 1 to 3, **characterized in that** vibration-damping means (7) are provided in order to prevent the transmission of vibration from the interdental treatment head (3) to the handle (1).

5. Oral-care appliance according to Claim 4, **characterized in that**, in the region located between the vibration element (11) and the handle (1), the neck part (4) has vibration-damping neck-part zones (7) made of an elastically compliant material.

6. Oral-care appliance according to one of Claims 1 to 5, **characterized in that** the power source used is an interchangeable battery (25) which can be inserted into the handle (1) and connected electrically to the drive (15).

7. Oral-care appliance according to Claim 6, **characterized in that** the battery (25) can be inserted into a sleeve (20) which is made of electrically conductive material and is arranged in a handle cavity (21) which is open in a rearward direction and can be closed from the rear by a closure part (22).

8. Oral-care appliance according to Claim 6 or 7, **characterized in that** one battery pole (30) is connected electrically to the drive (15) via a spring contact (29) and via lines (31; 33) which lead from the spring contact (29) to the drive (15), and the other battery pole (35) is connected electrically to the drive via a part (22a) of the closure part (22) which is releasably connected to the handle (1) and via a line (34) which is connected to the drive (15), wherein a switch (32) is provided in order to break one of the two electrical connections.

9. Oral-care appliance according to Claim 8, **characterized in that** the lines (31; 33) which lead from the spring contact (29) to the drive (15) can be connected to one another via the switch (32), wherein the switch (32) is fitted in the handle (1) and can be actuated from the outside of the handle (1).

10. Oral-care appliance according to Claim 8, **characterized in that** the switch is integrated in the closure part (22) and can be actuated by rotation of the closure part (22), which can be screwed into the handle (1) or connected thereto in a bayonet-like manner.

11. Oral-care appliance according to one of Claims 1 to 10, **characterized in that** the interdental treatment head (3) has a retaining part (2) on which an interdental treatment part (6b, 6c, 6d) is positioned in an interchangeable manner.

12. Oral-care appliance according to one of Claims 1 to 11, **characterized in that** the interdental treatment head (3) is arranged in a movable manner in relation to the neck part (4), and it can be made to move relative to the neck part (4) by the vibrations generated by means of the vibration device (10).

13. Oral-care appliance according to one of Claims 1 to 12, **characterized in that** the vibration device (10) and the electronic components form a unit which is intended to be introduced into a moulding injection moulded from a first material component and to be encapsulated, at least in part, by at least one further material component.

14. Oral-care appliance according to one of Claims 1 to 12, **characterized in that** the vibration device (10) and the electronic components form a unit which is intended to be accommodated between two separately produced toothbrush parts which are connected to one another in a water-tight manner, preferably welded.

15. Oral-care appliance according to one of Claims 1 to 14, **characterized in that** the mechanical vibration device (10) has a diameter of less than 15 mm, preferably less than 6 mm, and a length of less than 35 mm, preferably less than 20 mm.

16. Oral-care appliance according to one of Claims 1 to 15, **characterized in that** the interdental treatment part is designed in the form of an interdental brush (6b, 6c).

17. Oral-care appliance according to one of Claims 1 to 15, **characterized in that** the interdental treatment part is designed in the form of an interdental treatment element (6d) for removing plaque and tartar in the spaces between the teeth.

## Revendications

1. Appareil de soins dentaires comprenant une poignée (1), une tête de traitement interdentaire avant (3) présentant une partie de traitement interdentaire (6b, 6c, 6d), une partie de col (4) reliant la tête de traitement interdentaire (3) à la poignée (1), une source d'énergie électrique (25) montée dans la poignée (1), et un dispositif vibrant mécanique (10) animant la tête de traitement interdentaire (3) en mouvement de vibration, qui présente un entraînement (15) avec un arbre (15a) sur lequel repose un élément vibrant (11) réalisé sous forme d'excentrique, l'arbre (15a) de l'entraînement (15) constituant un axe de rotation qui s'étend dans la direction longitudinale de l'appareil de soins dentaires et l'élément vibrant (11) pouvant tourner autour de cet axe de rotation, **caractérisé en ce que** le dispositif vibrant (10) est monté dans la tête de traitement interdentaire (3) ou dans la région de la partie de col (4) adjacente à la tête de traitement interdentaire (3) et est connecté fonctionnellement à la source d'énergie électrique (25) par le biais de connexions électriques (33, 34) s'étendant dans la partie de col (4).

2. Appareil de soins dentaires selon la revendication 1, **caractérisé en ce que** l'entraînement (15) pouvant être connecté électriquement à la source d'énergie (25) est disposé immédiatement à côté de l'élément vibrant (11) dans la tête de traitement interdentaire (3) ou dans la région de la partie de col (4) adjacente à la tête de traitement interdentaire (3).

3. Appareil de soins dentaires selon la revendication 1 ou 2, **caractérisé en ce que** l'élément vibrant (11) et l'entraînement (15) sont montés dans un boîtier (12).

4. Appareil de soins dentaires selon l'une quelconque des revendications 1 à 3, **caractérisé en ce que** l'on prévoit, pour éviter un transfert des vibrations de la tête de traitement interdentaire (3) à la poignée (1), des moyens d'amortissement des vibrations (7).

5. Appareil de soins dentaires selon la revendication 4, **caractérisé en ce que** la partie de col (4) présente, dans la région située entre l'élément vibrant (11) et la poignée (1) des zones de partie de col amortissant les vibrations (7) en un matériau élastiquement flexible.

6. Appareil de soins dentaires selon l'une quelconque des revendications 1 à 5, **caractérisé en ce que** l'on utilise comme source d'énergie une pile remplaçable (25), qui peut être insérée dans la poignée (1) et qui peut être connectée électriquement à l'entraînement (15).

7. Appareil de soins dentaires selon la revendication 6, **caractérisé en ce que** la pile (25) peut être insérée dans une douille (20) en matériau électriquement conducteur disposée dans une cavité de poignée (21) ouverte vers l'arrière et pouvant être fermée par l'arrière par une pièce de fermeture (22).

8. Appareil de soins dentaires selon la revendication 6 ou 7, **caractérisé en ce que** la connexion électrique d'un pôle de la pile (30) à l'entraînement (15) s'effectue par le biais d'un contact à ressort (29) et par le biais de conduites (31 ; 33) conduisant à l'entraînement (15) depuis le contact à ressort (29), et la connexion électrique de l'autre pôle de la pile (35) est établie par le biais d'une pièce (22a) de la pièce de fermeture (22) en liaison amovible avec la poignée (1) et par le biais d'une conduite (34) raccordée à l'entraînement (15), un commutateur (32) pour couper l'une des deux connexions électriques étant prévu.

9. Appareil de soins dentaires selon la revendication 8, **caractérisé en ce que** les conduites (31 ; 33) conduisant du contact à ressort (29) à l'entraînement (15) peuvent être connectées les unes aux autres par le biais du commutateur (32), le commutateur (32) étant incorporé dans la poignée (1) et pouvant être actionné depuis le côté extérieur de la poignée (1).

10. Appareil de soins dentaires selon la revendication 8, **caractérisé en ce que** le commutateur est intégré dans la pièce de fermeture (22) et peut être actionné par rotation de la partie de fermeture (22) pouvant être vissée dans la poignée (1) ou pouvant être connectée à celle-ci par une connexion de type à baïonnette.

11. Appareil de soins dentaires selon l'une quelconque des revendications 1 à 10, **caractérisé en ce que** la tête de traitement interdentaire (3) présente une pièce de retenue (2) sur laquelle est posée une partie de traitement interdentaire (6b, 6c, 6d) remplaçable.

12. Appareil de soins dentaires selon l'une quelconque des revendications 1 à 11, **caractérisé en ce que** la tête de traitement interdentaire (3) est disposée de manière mobile par rapport à la partie de col (4) et peut être animée d'un mouvement relatif par rapport à la partie de col (4) sous l'effet des vibrations produites au moyen du dispositif vibrant (10).

13. Appareil de soins dentaires selon l'une quelconque des revendications 1 à 12, **caractérisé en ce que** le dispositif vibrant (10) et les composants électroniques forment une unité qui est prévue pour être incorporée dans une pièce moulée fabriquée en un premier composant de matériau par un procédé de moulage par injection, et pour être surmoulée au moins en partie avec au moins un composant de matériau supplémentaire.

14. Appareil de soins dentaires selon l'une quelconque des revendications 1 à 12, **caractérisé en ce que** le dispositif vibrant (10) et les composants électroniques forment une unité qui est prévue pour être montée entre deux parties de brosse à dents fabriquées séparément, qui sont connectées l'une à l'autre de manière étanche à l'eau, de préférence par soudage.

15. Appareil de soins dentaires selon l'une quelconque des revendications 1 à 14, **caractérisé en ce que** le dispositif vibrant mécanique (10) présente un diamètre inférieur à 15 mm, de préférence inférieur à 6 mm, et une longueur inférieure à 35 mm, de préférence inférieure à 20 mm.

16. Appareil de soins dentaires selon l'une quelconque des revendications 1 à 15, **caractérisé en ce que** la partie de traitement interdentaire est réalisée sous forme de brosse interdentaire (6b, 6c).

17. Appareil de soins dentaires selon l'une quelconque des revendications 1 à 15, **caractérisé en ce que** la partie de traitement interdentaire est réalisée sous forme d'un élément de traitement interdentaire (6d) destiné à éliminer la plaque et le tartre dans les espaces interdentaires.
